# EUROPÄISCHE PATENTSCHRIFT

(11) **EP 2 483 526 B1**
(45) Veröffentlichungstag und Bekanntmachung des Hinweises auf die Patenterteilung: **16.09.2015**
(21) Anmeldenummer: 10760294.8
(22) Anmeldetag: 21.09.2010
(51) Int. Cl.: B29L 31/08, B29C 70/34, B29C 70/08, F01D 5/28, F01D 5/14

(54) **Endstufenlaufschaufel einer Dampfturbine welche ein Erosionschutzbauteil beinhaltet**
Final-stage rotor blade of a steam turbine comprising a protection insert against erosion
Aube mobile d'étage final d'une turbine à vapeur comportant une piece de protection conte l'érosion

(30) Priorität: 30.09.2009 DE 102009047798
(43) Veröffentlichungstag der Anmeldung: 08.08.2012
(73) Patentinhaber: Siemens Aktiengesellschaft, 80333 München (DE)
(72) Erfinder: EBERT, Christoph, 01277 Dresden (DE); HAJE, Detlef, 02828 Görlitz (DE); LANGKAMP, Albert, 01324 Dresden (DE)
(86) Internationale Anmeldenummer: PCT/EP2010/063871
(87) Internationale Veröffentlichungsnummer: WO 2011/039075

(56) Entgegenhaltungen:
- EP-A1- 0 249 092
- EP-A1- 1 788 197
- EP-A1- 1 788 197
- DE-A1- 10 013 373
- DE-C- 536 278
- DE-C1- 2 841 827

## Beschreibung

Die Erfindung betrifft eine Turbinenschaufel nach dem Oberbegriff des unabhängigen Patentanspruchs 1.

Des Weiteren betrifft die Erfindung ein Verfahren zum Herstellen einer Turbinenschaufel nach dem Oberbegriff der unabhängigen Patentansprüche 9 und 13.

Turbinenschaufel und insbesondere Turbinenschaufel von Dampfturbinen werden derzeit vorwiegend aus Stahl gefertigt. Aufgrund des hohen Gewichtes der Stahlturbinenschaufel und den daraus resultierenden hohen Fliehkräfte sind die Drehzahl sowie die maximale Schaufelllänge der Endstufenlaufschaufel begrenzt. Hierdurch sind die Abströmfläche des Abdampfgehäuses und damit die Leistung sowie der Wirkungsgrad der Turbine limitiert. Um die Leistung und den Wirkungsgrad zukünftiger Turbinen zu steigern, wird zunehmend über den Einsatz von Endstufenlaufschaufeln aus Faserverbundwerkstoff nachgedacht. Faserverbundwerkstoffe haben den Vorteil einer hohen spezifischen Festigkeit bei gleichzeitig geringem Gewicht.

Die EP 1 788 197 A1 der Anmelderin offenbart eine Turbinenschaufel für eine Dampfturbine, wobei die Turbinenschaufel zumindest bereichsweise aus Faserverbundwerkstoffen beteht und wobei die Turbinenschaufel wenigstens ein Erosionsschutzbauteil aufweist.

Das Herstellen von Turbinenschaufeln aus Faserverbundwerkstoffen erfolgt durch Verpressen und Verkleben mindestens zweier Lagen von Fasermatten gleicher oder verschiedener Materialien. Als Fasermatten eignen sich insbesondere Glasfasern oder Kohlestofffasern. Da Faserverbundwerkstoffe nur in Faserrichtung eine hohe Festigkeit aufweisen, ist eine individuelle, beanspruchungsgerechte Ausrichtung der Faserlagen notwendig. Meist werden die Fasermatten aus mehreren übereinandergelegten Fasermatten mit unterschiedlicher Hauptfaserrichtung hergestellt um eine Festigkeit in mehreren Richtungen zu erzielen.

Die einzelnen Fasermatten werden mittels einer Matrix, üblicherweise ein Kunstharz, miteinander verbunden. Der Matrixanteil muss dabei so hoch sein, dass die Fasermatten untereinander fest verbunden sind. Ein zu großer Matrixanteil führt jedoch zu einer Abnahme der Festigkeit des Faserverbundwerkstoffes.

Für die Herstellung von Turbinenschaufeln aus Faserverbundwerkstoff eignen sich unterschiedliche Verfahren, wobei man grundsätzlich zwischen offenen und geschlossenen Verfahren unterscheidet. Bei beiden Verfahren werden Faserhalbzeuge, hierunter versteht man unter anderem Gewebe, Gelege oder Fasermatten, in ein Infiltrierwerkzeug gelegt und mit dem Matrixmaterial infiltriert. Beim infiltrieren wird das Matrixmaterial in das Gewebe eingebracht und ein Verbund zwischen Matrixmaterial und Faserhalbzeug hergestellt. Das überschüssige Matrixmaterial muss beim infiltrieren entfernt werden und die Turbinenschaufel muss anschließend aushärten, bevor sie aus dem Infiltrierwerkzeug genommen werden kann.

Das derzeit geläufigste offene Verfahren zum Herstellen von Faserverbundschaufeln ist das Handlegeverfahren. Hierbei werden die Faserhalbzeuge von Hand in das Infiltrierwerkzeug eingelegt und mit der Matrix getränkt. Anschließend wird das Laminat mit Hilfe einer Rolle durch Anpressen entlüftet. Dadurch soll nicht nur die im Laminataufbau vorhandene Luft sondern auch überschüssiges Matrixmaterial aus den Fasermattenschichten entfernt werden. Das Vorgehen wird so oft wiederholt, bis die gewünschte Schichtdicke vorhanden ist. Nach dem Aufbringen aller Schichten muss das Bauteil aushärten. Das Aushärten erfolgt aufgrund einer chemischen Reaktion des Matrixmaterials mit einem zum Matrixmaterial zugefügten Härter. Der Vorteil des Handlegeverfahrens besteht in dem geringen Werkzeug von Ausstattungsaufwand. Demgegenüber steht jedoch eine geringe Bauteilqualität (geringer Fasergehalt) und der hohe manuelle Aufwand, der geschulte Laminierer voraussetzt.

Das Handauflegen kann auch als geschlossenes Verfahren ausgeführt werden. Das geschlossene Verfahren erfolgt mittels einer Vakuumpresse. Nach dem Einbringen der Fasermatten in das Infiltrierwerkzeug wird die Form mit einer Trennfolie, einem Absaugvlies und einer Vakuumfolie abgedeckt. Zwischen der Vakuumfolie und der Form wird ein Unterdruck erzeugt. Dies bewirkt, dass der Verbund zusammengepresst wird. Eventuell noch enthaltene Luft wird abgesaugt und das überschüssige Matrixmaterials wird vom Absaugvlies aufgenommen. So kann gegenüber dem offenen Handauflegeverfahren eine höhere Bauteilqualität erzielt werden.

Ein weiteres geschlossenes Verfahren stellt das Prepregverfahren dar. Hierbei werden mit Matrixwerkstoff vorimprägnierte also bereits getränkte Fasermatten in das Infiltrierwerkzeug gelegt. Das Harz ist dabei nicht mehr flüssig, sondern hat eine leicht klebrige feste Konsistenz. Der Verbund wird anschließend mittels Vakuumsack entlüftet und danach, häufig im Autoklaven, unter Druck und Hitze ausgehärtet. Das Prepregverfahren ist aufgrund der notwendigen Betriebsausstattung (Kühlanlagen, Autoklaven) und der anspruchsvollen Prozessführung (Temperaturmanagement) eines der teuersten Herstellungsverfahren. Es ermöglicht jedoch auch eine der höchsten Bauteilqualität.

Ein weiteres geschlossenes Verfahren zum Herstellen von Faserverbundschaufeln stellt das Vakuuminfusionsverfahren dar. Bei diesem Verfahren werden die trockenen Faserlagen in ein mit Trennmittel beschichtetes Infiltrierwerkzeug eingelegt. Darüber wird ein Trenngewebe sowie ein Verteilermedium gelegt, dass das gleichmäßige Fließen des Matrixmaterials erleichtert. Mittels Vakuum-Abdichtband wird die Folie gegen das Infiltrierwerkzeug abgedichtet und das Bauteil anschließend mit Hilfe einer Vakuumpumpe evakuiert. Der Luftdruck presst die eingelegten Teile zusammen und fixiert sie. Das temperierte flüssige Matrixmaterials wird durch das eingelegte Vakuum in das Fasermaterial gesaugt. Nachdem die Fasern vollständig getränkt sind, wird die Matrixmaterialzufuhr unterbunden und der getränkte Faserverbundwerkstoff kann nach dem Aushärten dem Infiltrierwerkzeug entnommen. Vorteil dieses Verfahrens ist die gleichmäßige und fast blasenfreie Tränkung der Faser und somit die hohe Qualität der produzierten Bauteile sowie die Reproduzierbarkeit.

Die Aushärtezeiten bei den einzelnen Verfahren sind jeweils abhängig vom gewählten Matrixwerkstoff (Harz) und der Aushärtetemperatur.

Die vorgenannten Verfahren stellen allesamt gute Möglichkeiten zum Herstellen von Faserverbundschaufeln dar. Die solchermaßen hergestellten Turbinenschaufeln haben jedoch den Nachteil, dass sie aufgrund des verwendeten Materials sehr anfällig gegen Tropfenschlagerosion sind. Tropfenschlagerosion tritt in der Endstufe von Turbinenschaufeln auf, in dem Wasser aus der Dampfströmung zu Tropfen auskondensiert und diese Tropfen mit hoher Geschwindigkeit und Energie auf die Turbinenschaufeln auftreffen. Durch die hohe Aufschlagsenergie der Wassertropfen kommt es zu einer raschen Zerstörung des Faserverbundwerkstoffes.

Aufgabe der vorliegenden Erfindung ist es daher, eine Turbinenschaufel, insbesondere eine Endstufenschaufel für eine Dampfturbine bereitzustellen, die zumindest bereichsweise aus Faserverbundwerkstoff besteht und die einen hohen Schutz gegen Erosion bietet. Des Weiteren ist es Aufgabe der vorliegenden Erfindung, ein Verfahren zum Herstellen einer solchen Turbinenschaufel aufzuzeigen.

Die Aufgabe wird hinsichtlich der Turbinenschaufel durch die Merkmale des unabhängigen Patentanspruches 1 und hinsichtlich des Verfahrens durch die Merkmale des unabhängigen Anspruchs 9 gelöst.

Vorteilhafte Ausgestaltungen und Weiterbildungen, welche einzeln oder in Kombination miteinander einsetzbar sind, sind Gegenstand der Unteransprüche.

Die erfindungsgemäße Turbinenschaufel, insbesondere Endstufenlaufschaufel für eine Dampfturbine, wobei die Turbinenschaufel zumindestens bereichsweise aus Faserverbundwerkstoff besteht, und wobei die Turbinenschaufel wenigstens ein Erosionsschutzbauteil aufweist zeichnet sich dadurch aus, dass zwischen dem Erosionschutzbauteil und der Turbinenschaufel eine Zwischenschicht angeordnet ist. Das Erosionsschutzbauteil ist dabei derart angeordnet, dass es den Faserverbundwerkstoff wirkungsvoll gegen Tropfenschlagerosion schützt. Hierzu ist es zumindest an den besonders erosionsbeanspruchten Stellen der Turbinenschaufel angeordnet. Durch die Verwendung des Erosionsschutzbauteils kann die Turbinenschaufel aus Faserverbundwerkstoff hergestellt werden, ohne dass die Erosionsbeanspruchung gegenüber Turbinenschaufeln aus Stahl abnimmt. Dabei wird das Gewicht durch die Verwendung von Faserverbundwerkstoff deutlich herabgesenkt, wodurch die Fliehkraftbeanspruchung insbesondere im stark belasteten Fußabschnitt der Turbinenschaufel deutlich reduziert wird. Infolgedessen kann die Schaufellänge und damit Abströmfläche des Abdampfgehäuses vergrößert und die Drehzahl der Turbine erhöht werden. Hierdurch kommt es zu einer Erhöhung des Wirkungsgrades der Dampfturbine.

Sehr harte Werkstoffe bergen die Gefahr, dass der Werkstoff aufgrund der größeren Spröde zu Abplatzungen neigt. Durch die Verwendung einer Zwischenschicht, insbesondere einer elastischen oder einer viskoelastischen Zwischenschicht wird die Aufschlagsenergie der Tropfen durch die Zwischenschicht absorbiert bzw. vermindert, wodurch die Gefahr eines Abplatzens der harten äußeren Schicht des Erosionsschutzbauteils vermindert wird.

Eine vorteilhafte Ausgestaltung der Erfindung sieht vor, dass das Erosionsschutzbauteil in die Schaufelkontur der Turbinenschaufel eingefügt ist. Eingefügt bedeutet dabei, dass die Turbinenschaufel so konstruiert ist, dass sich die Schaufelkontur aus der Turbinenschaufel selbst und dem Erosionsschutzbauteil ergibt. Dadurch, dass das Erosionsschutzbauteil in die Schaufelkontur der Turbinenschaufel eingefügt ist, kommt es zu keiner Veränderung der Strömungsverhältnisse an der Turbinenschaufel, wie dies bei einem Erosionsschutzbauteilen der Fall wäre, welches lediglich auf die Turbinenschaufel aufgebracht ist. Das Strömungsverhalten an der Turbinenschaufel und damit in der gesamten Turbine bleibt somit unverändert.

Eine weitere vorteilhafte Ausgestaltung der Erfindung sieht vor, dass sich das Erosionsschutzbauteil so in die Schaufelkontur der Turbinenschaufel einfügt, dass sich ein fließender Übergang zwischen dem Erosionsschutzbauteil und der Turbinenschaufel ergibt. Durch den fließenden Übergang zwischen dem Erosionsschutzbauteil und der Turbinenschaufel werden Kanten vermieden, die zu einer Schwächung der Turbinenschaufel führen könnten. Außerdem werden hierdurch auch Kanten an der Oberfläche der Turbinenschaufel vermieden, die zu einer Strömungsablösung führen würden.

Erfindungsgemäß bevorzugt ist das eingefügte Erosionsschutzbauteil durch laminieren und/oder Kleben und/oder Befestigungsmittel, insbesondere Schrauben, Nieten oder Stifte mit der Turbinenschaufel verbunden. Die auf diese Weise befestigten Erosionsschutzbauteile gewährleisten eine sichere und dauerhafte Verbindung mit der Turbinenschaufel auch bei hohen Umfangsgeschwindigkeiten und hohen Fliehkräften. Dies ist besonders wichtig, da abfliegende Erosionsschutzbauteile zu großen Schäden an der Turbinenschaufel führen könnten.

Eine besonders vorteilhafte Ausgestaltung der Erfindung sieht vor, dass das Erosionsschutzbauteil aus Hartmetall, Titan oder Keramik besteht. Hartmetall, Titan und Keramik sind besonders erosionsbeständig und eignen sich somit besonders gut als Material für das Erosionsschutzbauteil. Durch die Verwendung dieser Materialien kann die Lebensdauer des Erosionsschutzbauteils gegenüber anderen Werkstoffen deutlich erhöht werden.

Eine weitere bevorzugte Ausgestaltung der Erfindung sieht vor, dass das Erosionsschutzbauteil einen mehrschichtigen Aufbau aufweist. Der mehrschichtige Aufbau kann aus verschiedenen Metallschichten, aus verschiedenen Schichten Fasermaterial oder aus einer Kombination von beiden bestehen. Durch die gezielte Auswahl von Material für die einzelnen Schichten können unterschiedliche Eigenschaften der Schichten vorteilhaft miteinander kombiniert werden. Die äußerste Schicht sollte dabei möglichst hart sein und die darunterliegenden Schichten sollten möglichst die Aufprallenergie der Tropfen absorbieren und die Körperschallwellen, die durch das Auftreffen der Tropfen erzeugt werden, absorbieren, so dass Sie nicht in das Grundmaterial der Turbinenschaufel einwirken können.

Eine besonders vorteilhafte Ausgestaltung der Erfindung sieht vor, dass ein Erosionsschutzbauteil zumindestens an der Eintrittskante und/oder der Austrittskante der Turbinenschaufel angeordnet ist. Im normalen Betrieb der Turbine treffen die mit der Dampfströmung strömenden Flüssigkeitstropfen auf die Eintrittskante der Turbinenschaufel auf und sorgen dort für erhebliche Schäden durch Tropenerosion. Die übrigen Bereiche der Turbinenschaufel sind nicht so stark durch Erosion belastet. Aus diesem Grund sollte zumindest die stark erosionsgefährdete Eintrittskante mit einem Erosionsschutzbauteil ausgebildet sein. Auf einen weiteren Erosionsschutz der Turbinenschaufel kann unter Umständen verzichtet werden. Hierdurch wird das Gewicht der Turbinenschaufel so gering wie möglich gehalten, wodurch die Fliehkraftbeanspruchung der Turbinenschaufel minimiert wird. Das Anbringen eines Erosionsschutzbauteiles an der Austrittskante kann unter Umständen ebenfalls sinnvoll sein. Die Austrittskante der Turbinenschaufel ist im normalen Betrieb der Turbine nicht durch Erosion gefährdet. Im Ventilationsbetrieb der Turbine wird jedoch häufig Wasser in die Dampfturbine eingespritzt, um eine Überhitzung zu vermeiden. Die Wassereinspritzung erfolgt üblicherweise an der Austrittskante der Turbinenschaufel. Hierdurch kann es unter Umständen zu einer Erosionsbelastung auch an der Austrittskante der Turbinenschaufel kommen. Einen Erosionsschutzbauteil an der Austrittskante kann hier die Erosionsbeanspruchung reduzieren.

Das erfindungsgemäßes Verfahren zum Herstellen einer Turbinenschaufel mittels eines Infiltrierwerkzeuges umfassend folgenden Verfahrensschritte:
- Einlegen von Faserhalbzeugen gemeinsam mit dem Erosionsschutzbauteil in das Infiltrierwerkzeug,
- Infiltrieren des Matrixmaterials, insbesondere Harz, in das Faserhalbzeug,
- Aushärten des Matrixmaterials,
- Entnehmen der Turbinenschaufel aus dem Infiltrierwerkzeug.
zeichnet sich dadurch aus, dass das Erosionsschutzbauteil vor dem Infiltrieren mit einem Trennmittel versehen wird und nach dem Infiltrieren durch Kleben und/oder zusätzliche Befestigungsmittel, insbesondere Schrauben, Nieten oder Stifte an der Turbinenschaufel befestigt wird. Das nachträgliche Anbringen des Erosionsschutzbauteils hat den Vorteil, dass es vor der endgültigen Befestigung noch nachbearbeitet werden kann bzw. die Lage des Erosionsschutzbauteils an der Turbinenschaufel leicht korrigiert werden kann.

Ein zweites erfindungsgemäßes Verfahren zum Herstellen einer Turbinenschaufel mittels eines Infiltrierwerkzeugs ist gekennzeichnet dadurch, das dass Infiltrierwerkzeug so ausgebildet ist, das nach dem Infiltrieren an den Stellen der Turbinenschaufel an denen ein Erosionsschutzbauteil angebracht werden soll, eine zum Erosionsschutzbauteil komplementäre ausgebildete Ausnehmung vorhanden ist und dass, das Verfahren folgende Verfahrensschritte aufweist:
- Einlegen von Faserhalbzeugen in das Infiltrierwerkzeug
- Infiltrieren des Matrixmaterials, insbesondere Harz, in das Faserhalbzeugen
- Aushärten des Matrixmaterials
- Entnehmen der Turbinenschaufel (1) aus dem Infiltrierwerkzeug
- Befestigen des Erosionsschutzbauteils in den Ausnehmungen der Turbineschaufel, insbesondere durch Kleben und/ oder zusätzlichen Befestigungsmitteln (3), insbesondere Schrauben, Nieten oder Stiften.

Das nachträgliche Anbringen des Erosionsschutzbauteils hat wiederum den Vorteil, dass es vor der endgültigen Befestigung noch nachbearbeitet werden kann bzw. die Lage des Erosionsschutzbauteils an der Turbinenschaufel leicht korrigiert werden kann.

Beim Einlegen der Faserhalbzeuge und des Erosionsschutzbauteils in das Infiltrierwerkzeug ist darauf zu achten, dass das Erosionsschutzbauteil und die Faserhalbzeuge derart angeordnet sind, dass nach dem Infiltrieren des Matrixmaterials in das Faserhalbzeug eine Turbinenschaufel entsteht, in deren Kontur das Erosionsschutzbauteil vollständig integriert ist. Unter Faserhalbzeuge versteht man unter anderem Gewebe, Gelege oder Fasermatten. Als Matrixmaterial eignet sich Harz insbesondere Kunstharz. Das erfindungsgemäße Verfahren zum Herstellen der Turbinenschaufel hat den großen Vorteil, dass in einem Verfahrensschritt die Turbinenschaufel mit integriertem Erosionsschutzbauteil ausgebildet werden kann. Ein nachträgliches Anbringen eines Erosionsschutzbauteils ist nicht notwendig. Durch die Integration des Erosionsschutzbauteils in die Schaufelkontur bleibt diese vollständig erhalten und es kommt zu keiner Veränderung der Strömungsverhältnisse gegenüber konventionellen Turbinenschaufeln. Eine strömungstechnische Neuauslegung der Turbine ist daher nicht notwendig.

Ausführungsbeispiele und weitere Vorteile der Erfindung werden im Folgenden anhand der Zeichnungen erläutert. Es zeigt schematisch:
Figur 1: eine Seitenansicht einer Turbinenschaufel;
Figur 2: eine Detailansicht einer Eintrittskante einer Turbinenschaufel mit einem einteiligen Erosionsschutzbauteil;
Figur 3: eine Detailansicht einer Eintrittskante einer erfindungsgemäßen Turbinenschaufel mit einem Erosionsschutzbauteil und einer Zwischenschicht aus einem elastischen und/oder viskoelastischen Material;
Figur 4: eine Detailansicht einer Eintrittskante einer erfindungsgemäßen Turbinenschaufel, wobei das Erosionsschutzbauteil einen mehrschichtigen Aufbau aufweist.
Figurübergreifend sind gleiche bzw. funktionsgleiche Bauteile mit denselben Bezugszeichen versehen.

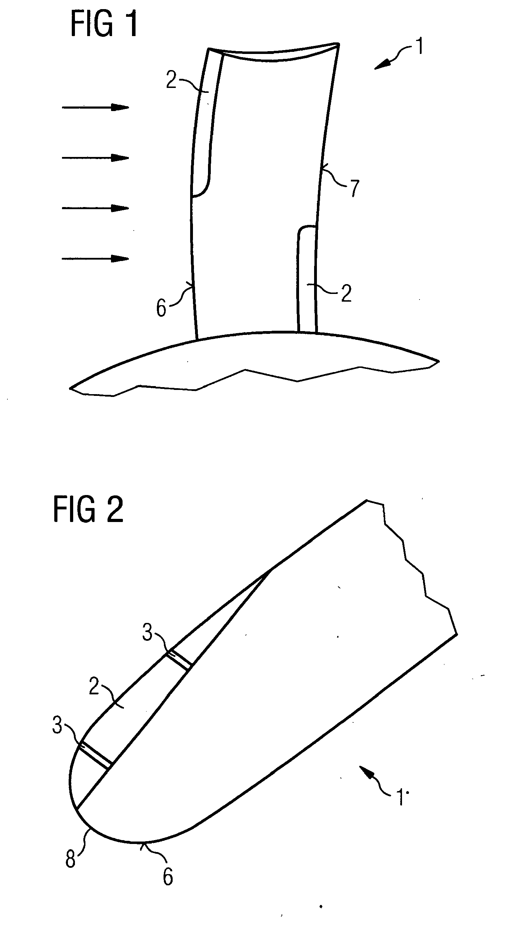

Figur 1 zeigt eine Turbinenschaufel 1, die insbesondere als Endstufenlaufschaufel für eine Dampfturbine verwendet werden kann. Die Turbinenschaufel 1 ist aus einem Faserverbundwerkstoff ausgebildet. Hierzu sind mehrere Lagen von Fasermatten übereinander angeordnet. Um die Vorteile der Fasern, d.h. die hohe Zugfestigkeit in Faserrichtung ausnutzen zu können, sind die Matten so übereinandergelegt, dass die Hauptfaserrichtung entsprechend der Hauptbeanspruchungsrichtung der Turbinenschaufel 1 ausgerichtet sind. Als Fasermaterial eignet sich insbesondere Glasfaser oder Kohlefaser. Die Fasermatten sind in einer Matrix eingebettet. Die Matrix besteht aus vorzugsweise aus einem Kunstharz und sorgt für eine Verbindung der Fasermatten untereinander. Die Matrix kann jedoch keine hohen Zugkräfte aufnehmen.

Da Turbinenschaufeln aus Faserverbundwerkstoff sehr empfindlich gegenüber Tropfenschlagerosion sind, weist die Turbinenschaufel 1 ein Erosionsschutzbauteil 2 an der Eintrittskante 6 auf. Die Eintrittskante 6 ist am stärksten von Erosion gefährdet, da die Wassertropfen im Wesentlichen hier auftreffen.
Das Erosionsschutzbauteil 2 ist im Ausführungsbeispiel nur in der oberen Hälfte der Eintrittskante 6 angebracht. In diesem Bereich der Eintrittskante 6 besteht die größte Erosionsbeanspruchung, da im Betrieb der Turbine hier die größten Umfangsgeschwindigkeiten auftreten. Das Erosionsschutzbauteil 2 ist so in die Schaufelkontur der Turbinenschaufel 1 eingefügt, dass sich ein fließender Übergang ohne Kanten zwischen dem Erosionsschutzbauteil 2 und der Turbinenschaufel 1 ergibt.
Das Erosionsschutzbauteil kann dabei direkt beim Herstellen der Turbinenschaufel mit einlaminiert werden oder auch später durch Kleben oder zusätzliche Befestigungsmittel insbesondere Schrauben, Nieten oder Stifte mit der Turbinenschaufel verbunden werden. Das Erosionsschutzbauteil 2 kann nach dem einlaminiert, zusätzlich mit Befestigungselementen gesichert werden, um so sicherzustellen, dass das Erosionsschutzbauteil 2 sicher mit der Turbinenschaufel 1 befestigt ist. Ein Lösen des Erosionsschutzbauteils, beispielsweise durch ein fehlerhaftes einlaminieren, könnte im Betrieb der Turbine zu großen Schäden an den Turbinenschaufeln 1 führen und ist daher unbedingt zu vermeiden.
Das Erosionsschutzbauteil 2 ist vorzugsweise aus Hartmetall, Titan oder Keramik auszubilden. Die große Härte dieser Materialien sorgt für eine hohe Erosionsbeständigkeit und damit für eine hohe Lebensdauer des Erosionsschutzbauteils 2. Da das Erosionsschutzbauteil 2 so gefertigt sind, dass es sich in die Schaufelkontur der Turbinenschaufel 1 nahtlos einfügen, ist eine nachträgliche Bearbeitung des Erosionsschutzbauteils 2 nicht notwendig. Dies bietet große Vorteile, da die harten Werkstoffe nur sehr schwer nachträglich zu bearbeiten sind und dies mit hohem Fertigungsaufwand verbunden wäre.
Die Turbinenschaufel 1 weist zusätzlich ein zweites Erosionsschutzbauteil 2 an der Austrittskante 7 der Turbinenschaufel 1 auf. Im normalen Betrieb ist die Austrittskante 7 nicht erosionsgefährdet, da hier kein Tropfeneinschlag vorliegt. Das Erosionsschutzbauteil 2 an der Austrittskante 7 der Turbinenschaufel 1 ist für den Ventilationsbetrieb vorgesehen. Im Ventilationsbetrieb der Dampfturbine wird, um eine Überhitzung zu vermeiden, Wasser von hinten gegen die Turbinenschaufel 1 gesprüht. Hierbei kann es unter ungünstigen Bedingungen vorkommen, dass Wassertropfen auf die Austrittskante 7 der Turbinenschaufel 1 auftreffen. Diese führen dann zu einer erhöhten Erosionsbelastung an der Austrittskante 7. Aus diesem Grund ist ein Erosionsschutzbauteil 2 an der Austrittskante 7 der Turbinenschaufel 1 vorgesehen.

Durch das Vorsehen der Erosionsschutzbauteile 2 an den erosionsgefährdeten Bereichen der Turbinenschaufel 1 kann die aus Faserverbundwerkstoff hergestellte Turbinenschaufel auch im Nassdampfbereich einer Dampfturbine eingesetzt werden. Dies ist bislang nicht möglich. Durch den Einsatz von Turbinenschaufeln aus Faserverbundwerkstoff kann das Gewicht der Turbinenschaufel deutlich reduziert werden. Die Reduzierung des Gewichtes der Turbinenschaufel führt dazu, dass die Fliehkraftbeanspruchung der Turbinenschaufel insbesondere im empfindlichen Bereich des Schaufelfußes reduziert werden kann bzw. dass bei gleicher Zugbeanspruchung die Schaufellänge und damit der Abströmquerschnitt des Abdampfgehäuses vergrößert werden kann. Eine Vergrößerung des Querschnitts des Abdampfgehäuses und eine Erhöhung der Drehzahl der Turbine führen zu einem erhöhten Wirkungsgrad der Dampfturbine.
Die beschriebene Turbinenschaufel 1 ist vollständig aus Faserverbundwerkstoff gefertigt. Denkbar ist aber auch eine Konstruktion, bei der nur ein Teilbereich aus Faserverbundwerkstoff gefertigt ist. So könnten beispielsweise das Schaufelblatt aus Faserverbundwerkstoff und der Schaufelfuß aus Stahl oder Titan gefertigt sein.

Figur 2 zeigt eine Detailansicht der in Figur 1 dargestellten Turbinenschaufel 1. Die Detailansicht zeigt die Seitenansicht der in Figur 1 gezeigten Turbinenschaufel 1. Aus dieser Sicht ist besonders gut zu erkennen, wie sich das Erosionsschutzbauteil 2 in die Schaufelkontur der Turbinenschaufel 1 einfügt. Die Turbinenschaufel 1 ist dabei so vorbereitet, dass sich nach Einfügen des Erosionsschutzbauteils 2 die ursprüngliche Schaufelkontur der Turbinenschaufel 1 ergibt. Zwischen dem Erosionsschutzbauteil 2 und der Turbinenschaufel 1 ergibt sich dabei ein fließender Übergang ohne jegliche Kanten. Die Strömungsbedingungen an der Turbinenschaufel 1 bleiben somit vollständig erhalten und ein Abreißen der Strömung am Übergang vom Erosionsschutzbauteil 2 zur Turbinenschaufel 1 wird vermieden. Im Ausführungsbeispiel erfolgt die Verbindung zwischen der Turbinenschaufel 1 und dem Erosionsschutzbauteil 2 durch das einlaminieren des Erosionsschutzbauteil 2 und die Sicherung mit zusätzlichen Befestigungsmitteln 3, insbesondere Schrauben, Nieten oder Stiften. Die Befestigungsmitteln 3 bieten zusätzliche Sicherheit gegen das Lösen des Erosionsschutzbauteils 2 insbesondere bei einem fehlerhaften laminieren.

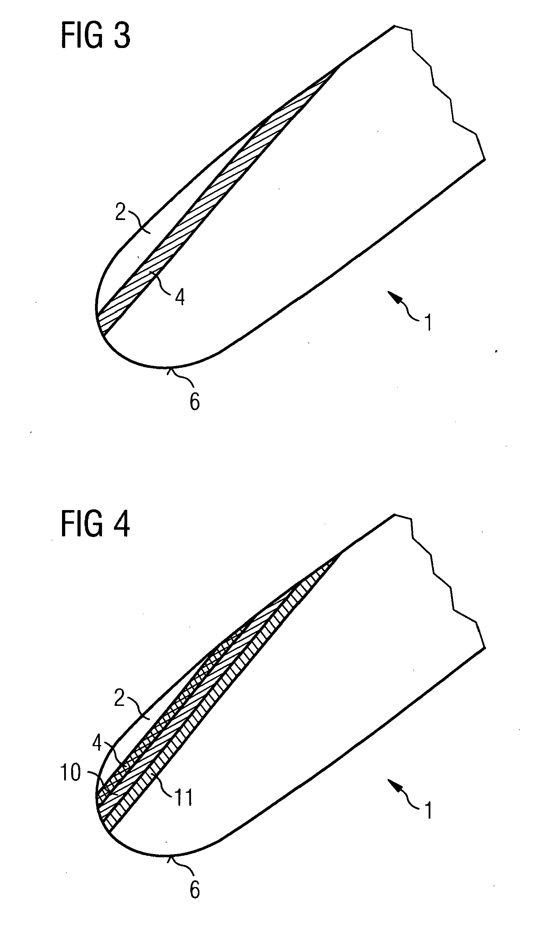

Figur 3 zeigt eine Detailansicht eines zweiten Ausführungsbeispieles einer Turbinenschaufel. Die Detailansicht zeigt wiederum die Eintrittskante 6 der Turbinenschaufel 1 in einer Seitenansicht. Zwischen dem Erosionsschutzbauteil 2 und der Turbinenschaufel 1 ist eine Zwischenschicht 4 angeordnet. Bei der Zwischenschicht 4 handelt es sich um eine elastische und/oder viskoelastische Zwischenschicht. Das Aufschlagen von Tropfen auf das Erosionsschutzbauteil 2 bewirkt starke Körperschallwellen, die sich innerhalb des Erosionsschutzbauteils 2 und die Turbinenschaufel 1 fortpflanzen. Die Körperschallwellen können zum einen zum Abplatzen von Teilen des Erosionsschutzbauteils 2 führen. Gleichzeitig können die Körperschallwellen zu einer Schädigung der Turbinenschaufel 1 und des Faserverbundwerkstoffes führen. Durch die elastische und/oder viskoelastische Zwischenschicht 4 werden die Körperschallwellen absorbiert. Hierdurch können sich die Körperschallwellen nicht in den Faserverbundwerkstoff fortpflanzen und dort zu eine Zerstörung des Werkstoffes führen. Gleichzeitig wird der Tropfeneinschlag bzw. die Aufschlagenergie des Tropfens von der Zwischenschicht aufgenommen, wodurch die Abplatzgefahr im Bereich des Erosionsschutzbauteiles 2 reduziert wird. Die Zwischenschicht 4 und das Erosionsschutzbauteil 2 sind dabei wieder so ausgebildet, dass sich eine fließender Übergang zur Turbinenschaufel 1 ergibt. Die Zwischenschicht 4 und das Erosionsschutzbauteil 2 können wiederum gleich bei der Herstellung mit einlaminiert werden oder auch später durch zusätzliche Befestigungselemente mit der Turbinenschaufel 1 verbunden werden.

Figur 4 zeigt ein drittes Ausführungsbeispiel einer Turbinenschaufel 1 in einer Detailansicht. Die Detailansicht zeigt wiederum die Eintrittskante 6 der Turbinenschaufel 1 in einer Seitenansicht. Das Erosionsschutzbauteil 2 weist hierbei einen mehrschichtigen Aufbau auf. Grundsätzlich ist der mehrschichtige Aufbau dabei so zu wählen, dass die äußere Schicht eine möglichst harte Erosionsbeständige Schicht ist, und die darunterliegenden Schichten die Körperschallwellen, welche durch den auftreffenden Tropfen erzeugt werden, möglichst gut absorbieren. Als Schichtmaterial können dabei sowohl unterschiedliche Fasermatten als auch unterschiedliche Metalle eingesetzt werden. Im Ausführungsbeispiel besteht der mehrschichtige Aufbau aus insgesamt vier unterschiedlichen Schichten 2, 4, 10, 11. Bei dem mehrschichtigen Aufbau handelt es sich um einen graduierten Aufbau mit unterschiedlichen Faserverbundschichten. Die äußere Schicht 2 besteht dabei aus einem sehr harten und erosionsunempfindlichen Material. Dabei ist darauf zu achten, dass die sehr harte Schicht nicht zu spröde ist, um eine Abplatzgefahr zu vermeiden. Unter der ersten Schicht 2 ist eine zweite elastische und/oder viskoelastische Schicht 4 angeordnet, die dafür sorgt, dass von den Tropfen erzeugte Körperschallwellen weitgehend absorbiert werden. Die nachfolgende Schicht 10 ist eine Glasmatte und die darunter liegende Schicht 11 ein Glasgewebe. Die Glasmatte und das Glasgewebe sorgen für eine besonders gute Verbindung zum Faserverbundwerkstoff der Turbinenschaufel 1 und sorgen zusätzlich für eine Absorption von Körperschallwellen. Die einzelnen Faserverbundschichten 2, 4, 10, 11 des Erosionsschutzbauteils 2 können auf das Grundmaterial der Turbinenschaufel auflaminiert werden und bilden danach einen festen Verbund mit der Turbinenschaufel 1. Die einzelnen Fasermatten sind dabei wieder so ausgebildet, dass sich ein fließender Übergang zwischen der Turbinenschaufel 1 und dem mehrschichtigen Erosionsschutzbauteil 2 ergibt. Die Schaufelkontur entspricht dabei wiederum einer Schaufelkontur wie sie üblicherweise, d.h. ohne Erosionsschutzbauelemente verwendet wird. Die Erosionsschutzbauelemente 2 tragen damit nicht zu einer Veränderung des Schaufelprofils bei und die Strömungseigenschaften der Turbinenschaufel bleiben erhalten.

Nachfolgend sollen die erfindungsgemäßen Verfahren zum Herstellen einer Turbinenschaufel mit Erosionsschutzbauteil näher erläutert werden.

Das Herstellen einer Turbinenschaufel mit einem oder mehrerer Erosionsschutzbauteile 2 erfolgt mittels eines Infiltrierwerkzeugs. Das Infiltrierwerkzeug bildet dabei eine Form für die herzustellende Turbinenschaufel.

Zum Herstellen der Turbinenschaufel werden in einem ersten Herstellungsverfahren die Faserhalbzeuge gemeinsam mit dem Erosionsschutzbauteil 2 in das Infiltrierwerkzeug gelegt. Dabei ist auf die korrekte Position des Erosionsschutzbauteiles 2 zu achten. Hierzu kann das Erosionsschutzbauteil 2 am Infiltrierwerkzeug fixiert werden. Nach dem Einlegen der Faserhalbzeuge und des Erosionsschutzbauteils 2 in das Infiltrierwerkzeug erfolgt der Infiltriervorgang. Hierbei kommt es zum Einbringen des Harzes in die Faserhalbzeuge. Das Einbringen kann dabei in einem offenen oder geschlossenen Verfahren erfolgen. Die unterschiedlichen Verfahren sind bereits in der Beschreibungseinleitung näher erläutert, so dass hier nicht mehr näher darauf eingegangen wird. Nachdem das Harz in die Faserhalbzeuge infiltriert ist, muss die Turbinenschaufel 1 aushärten. Die Aushärtezeit ist dabei abhängig vom gewählten Matrixwerkstoff sowie der Umgebungstemperatur. Nachdem das Matrixmaterial ausgehärtet ist, kann die Turbinenschaufel 1 aus dem Infiltrierwerkzeug entnommen werden. Das erfindungsgemäße Verfahren zum Herstellen der Turbinenschaufel 1 sieht vor, dass das Erosionsschutzbauteil 2 vor dem Infiltrieren mit einem Trennmittel versehen wird. Dadurch kommt es beim Infiltriervorgang nicht zu einer Verbindung des Erosionsschutzbauteils 2 mit der Turbinenschaufel 1. Die Befestigung des Erosionsschutzbauteils 2 an der Turbinenschaufel erfolgt in einem weiteren Verfahrensschritt durch Kleben und/oder zusätzliche Befestigungsmittel 3 wie Schrauben, Nieten oder Stifte.

Ein weiteres erfindungsgemäßes Verfahren zum Herstellen einer Turbinenschaufel 1 mit Erosionsschutzbauteil 2 sieht vor, dass ein Infiltrierwerkzeug benutzt wird, das eine Ausnehmung an der Stelle aufweist, an der später das Erosionsschutzbauteil 2 angebracht werden soll. Nach dem Aushärten der Turbinenschaufel 1 kann das Erosionsschutzbauteil 2 dann durch Kleben und/oder zusätzliche Befestigungsmittel 3 wie Schrauben, Nieten oder Stiften eingebracht werden.

Das nachträgliche Anbringen des Erosionsschutzbauteils 2 hat den Vorteil, dass, wenn es Passungenauigkeiten gibt, diese vor dem eigentlichen Befestigen beseitigt werden können. Die Bearbeitung des Erosionsschutzbauteils 2 vor der Befestigung an der Turbinenschaufel 1 ist einfacher zu bewerkstelligen. Insbesondere bei den vorzugsweise verwendeten harten Materialien, wie Hartmetall, Titan oder Keramik, die im Wesentlichen nur durch eine schleifende Bearbeitung bearbeitet werden können.

Die vorgestellten Verfahren zum Herstellen der Turbinenschaufel 1 mit Erosionsschutzbauteil 2 zeichnen sich allesamt dadurch aus, dass sich auf sehr einfache Weise eine Turbinenschaufel 1 ausbilden lässt, in die ein Erosionsschutzbauteil 2 derart integriert ist, dass sich die Schaufelkontur nicht von der Schaufelkontur herkömmlicher Turbinenschaufeln 1 unterscheidet. Ein Aufbringen eines Erosionsschutzbauteils oder einer zusätzlichen Beschichtung zum Schutz vor Erosion ist nicht notwendig. Die Erosionsschutzbauteile 2 lassen sich, falls sie übermäßig verschlissen sind, einfach austauschen und durch neue Erosionsschutzbauteile 2 ersetzen. Durch die Verwendung von erosionsunempfindlichen Erosionsschutzbauteilen 2 wird erstmals der Einsatz von Turbinenschaufeln aus Faserverbundwerkstoffen im Nassdampfgebiet möglich.

## Patentansprüche

1. Turbinenschaufel (1), für eine Dampfturbine, wobei die Turbinenschaufel (1) zumindest bereichsweise aus Faserverbundwerkstoff besteht,
und wobei die Turbinenschaufel (1) wenigstens ein Erosionsschutzbauteil (2) aufweist, **dadurch gekennzeichnet, dass**
zwischen dem Erosionsschutzbauteil (2) und der Turbinenschaufel (1) eine Zwischenschicht (4) angeordnet ist.

2. Turbinenschaufel (1) nach Anspruch 1,
**dadurch gekennzeichnet, dass**
sich das Erosionsschutzbauteil (2) in die Schaufelkontur der Turbinenschaufel (1) einfügt.

3. Turbinenschaufel (1) nach Anspruch 2,
**dadurch gekennzeichnet, dass**
sich das Erosionsschutzbauteil (2) so in die Schaufelkontur der Turbinenschaufel (1) einfügt, dass sich ein fließender Übergang ohne Kanten zwischen dem Erosionsschutzbauteil (2) und der Turbinenschaufel (1) ergibt.

4. Turbinenschaufel (1) nach Anspruch 2 oder 3,
**dadurch gekennzeichnet, dass**
das eingefügt Erosionsschutzbauteil (2) durch laminieren und/oder kleben und/oder Befestigungsmittel (3) mit der Turbinenschaufel (1) verbunden ist.

5. Turbinenschaufel (1) nach einem der vorherigen Ansprüche,
**dadurch gekennzeichnet, dass**
das Erosionsschutzbauteil (2) aus Hartmetall, Titan oder Keramik besteht.

6. Turbinenschaufel (1) nach einem der vorherigen Ansprüche,
**dadurch gekennzeichnet, dass**
die Zwischenschicht eine elastische und/oder viskoelastische Zwischenschicht ist.

7. Turbinenschaufel (1) nach einem der vorherigen Ansprüche,
**dadurch gekennzeichnet, dass**
das Erosionsschutzbauteil (2) einen mehrschichtigen Aufbau (5) aufweist.

8. Turbinenschaufel (1) nach einem der vorherigen Ansprüche,
**dadurch gekennzeichnet, dass**
ein Erosionsschutzbauteil (2) zumindest an der Eintrittskante (6) und/oder der Austrittskante (7) der Turbinenschaufel (1) angeordnet ist.

9. Verfahren zum Herstellen einer Turbinenschaufel (1) mittels eines Infiltrierwerkzeugs nach Anspruch 1 bis 8,
mit folgenden Verfahrensschritte:
- Einlegen von Faserhalbzeugen gemeinsam mit dem Erosionsschutzbauteil (2) in das Infiltrierwerkzeug
- Infiltrieren des Matrixmaterials, insbesondere Harz, in das Faserhalbzeugen
- Aushärten des Matrixmaterials
- Entnehmen der Turbinenschaufel (1) aus dem Infiltrierwerkzeug
**dadurch gekennzeichnet, dass**
das Erosionsschutzbauteil (2) vor dem Infiltrieren mit einem Trennmittel versehen wird und nach dem Infiltrieren durch Kleben und/ oder zusätzlichen Befestigungsmitteln (3), insbesondere Schrauben, Nieten oder Stiften an der Turbinenschaufel (1) befestigt wird.

10. Verfahren zum Herstellen einer Turbinenschaufel (1) mittels eines Infiltrierwerkzeugs nach Anspruch 1 bis 9,
**dadurch gekennzeichnet, dass**
das Infiltrierwerkzeug so ausgebildet ist, das nach dem Infiltrieren an den Stellen der Turbinenschaufel an denen ein Erosionsschutzbauteil angebracht werden soll eine zum Erosionsschutzbauteil komplementäre ausgebildete Ausnehmung vorhanden ist und dass, das Verfahren folgende Verfahrensschritte aufweist:
- Einlegen von Faserhalbzeugen in das Infiltrierwerkzeug
- Infiltrieren des Matrixmaterials, insbesondere Harz, in das Faserhalbzeugen
- Aushärten des Matrixmaterials
- Entnehmen der Turbinenschaufel (1) aus dem Infiltrierwerkzeug
- Befestigen des Erosionsschutzbauteils in den Ausnehmungen der Turbineschaufel (1), insbesondere durch Kleben und/ oder zusätzlichen Befestigungsmitteln (3), insbesondere Schrauben, Nieten oder Stiften.

## Claims

1. Turbine blade (1), for a steam turbine, wherein the turbine blade (1) is made at least in certain regions from fibre-reinforced composite material,
and wherein the turbine blade (1) has at least one anti-erosion component (2), **characterised in that** an intermediate layer (4) is arranged between the anti-erosion component (2) and the turbine blade (1).

2. Turbine blade (1) according to claim 1, **characterised in that** the anti-erosion component (2) is inserted into the blade contour of the turbine blade (1).

3. Turbine blade (1) according to claim 2, **characterised in that** the anti-erosion component (2) is inserted into the blade contour of the turbine blade (1) such that a smooth transition is created between the anti-erosion component (2) and the turbine blade (1).

4. Turbine blade (1) according to claim 2 or 3, **characterised in that** the inserted anti-erosion component (2) is connected to the turbine blade (1) by laminating and/or gluing and/or securing means (3).

5. Turbine blade (1) according to one of the preceding claims, **characterised in that** the anti-erosion component (2) is made from carbide, titanium or ceramic.

6. Turbine blade (1) according to one of the preceding claims, **characterised in that** the intermediate layer (4) is an elastic and/or viscoelastic intermediate layer (4).

7. Turbine blade (1) according to one of the preceding claims, **characterised in that** the anti-erosion component (2) has a multi-layer structure (5).

8. Turbine blade (1) according to one of the preceding claims, **characterised in that** an anti-erosion component (2) is arranged at least at the leading edge (6) and/or the trailing edge (7) of the turbine blade (1).

9. Method for making a turbine blade (1) using an impregnation mould according to claim 1 to 8, with the following method steps:
- laying fibre intermediates, together with the anti-erosion component (2), in the impregnation mould,
- impregnating the fibre intermediates with the matrix material, in particular resin,
- curing the matrix material,
- removing the turbine blade (1) from the impregnation mould
**characterised in that**
the anti-erosion component (2) is provided, before impregnation, with a release agent and, after impregnation, is secured to the turbine blade (1) by gluing and/or additional securing means (3), in particular screws, rivets or pins.

10. Method for making a turbine blade (1) using an impregnation mould according to claim 1 to 9, **characterised in that** the impregnation mould is constructed such that, after impregnation, a recess which is constructed to complement the anti-erosion component is present at the points on the turbine blade at which an anti-erosion component is to be attached, and **in that** the method has the following method steps:
- laying fibre intermediates in the impregnation mould,
- impregnating the fibre intermediates with the matrix material, in particular resin,
- curing the matrix material,
- removing the turbine blade (1) from the impregnation mould,
- securing the anti-erosion component in the recesses in the turbine blade (1), in particular by gluing and/or additional securing means (3), in particular screws, rivets or pins.

## Revendications

1. Aube de turbine (1), pour une turbine à vapeur, ladite aube de turbine (1) étant constituée au moins par zones de matériau composite renforcé par des fibres,
et ladite aube de turbine (1) présentant au moins un élément de protection contre l'érosion (2), **caractérisée en ce que**
entre l'élément de protection contre l'érosion (2) et l'aube de turbine (1), est placée une couche intermédiaire (4).

2. Aube de turbine (1) selon la revendication 1,
**caractérisée en ce que**
l'élément de protection contre l'érosion (2) s'insère dans le contour d'aube de l'aube de turbine (1).

3. Aube de turbine (1) selon la revendication 2,
**caractérisée en ce que**
l'élément de protection contre l'érosion (2) s'insère dans le contour d'aube de l'aube de turbine (1) de manière à obtenir un passage fluide sans arêtes entre l'élément de protection contre l'érosion (2) et l'aube de turbine (1).

4. Aube de turbine (1) selon la revendication 2 ou 3,
**caractérisée en ce que**
l'élément de protection contre l'érosion (2) inséré est solidarisé à l'aube de turbine (1) par laminage et/ou collage et/ou des moyens de fixation (3).

5. Aube de turbine (1) selon l'une des revendications précédentes,
**caractérisée en ce que**
l'élément de protection contre l'érosion (2) est constitué de métal dur, de titane ou de céramique.

6. Aube de turbine (1) selon l'une des revendications précédentes,
**caractérisée en ce que**
la couche intermédiaire est une couche intermédiaire élastique et/ou viscoélastique.

7. Aube de turbine (1) selon l'une des revendications précédentes,
**caractérisée en ce que**
l'élément de protection contre l'érosion (2) présente une structure multicouche (5).

8. Aube de turbine (1) selon l'une des revendications précédentes,
**caractérisée en ce que**
un élément de protection contre l'érosion (2) est disposé au moins sur l'arête d'entrée (6) et/ou l'arête de sortie (7) de l'aube de turbine (1).

9. Procédé de fabrication d'une aube de turbine (1) au moyen d'un outil d'infiltration selon la revendication 1 à 8, comprenant les étapes suivantes :
- introduire un demi-produit fibreux conjointement avec l'élément de protection contre l'érosion (2) dans l'outil d'infiltration,
- infiltrer le matériau de matrice, en particulier de la résine, dans le demi-produit fibreux,
- faire durcir le matériau de matrice,
- retirer l'aube de turbine (1) de l'outil d'infiltration, **caractérisé en ce que**
l'élément de protection contre l'érosion (2) est muni avant l'infiltration d'un moyen de séparation et est fixé après l'infiltration sur l'aube de turbine (1), par collage et/ou des moyens de fixation (3) supplémentaires, en particulier des vis, des rivets ou des broches.

10. Procédé de fabrication d'une aube de turbine (1) au moyen d'un outil d'infiltration selon la revendication 1 à 9,
**caractérisé en ce que**
l'outil d'infiltration est réalisé de manière à avoir après l'infiltration, aux endroits de l'aube de turbine où doit être fixé un élément de protection contre l'érosion, un évidement de forme complémentaire à l'élément de protection contre l'érosion, et **en ce que** le procédé comporte les étapes suivantes :
- introduire un demi-produit fibreux dans l'outil d'infiltration,
- infiltrer le matériau de matrice, en particulier de la résine, dans le demi-produit fibreux,
- faire durcir le matériau de matrice,
- retirer l'aube de turbine (1) de l'outil d'infiltration,
- fixer l'élément de protection contre l'érosion dans les évidements de l'aube de turbine (1), notamment par collage et/ou des moyens de fixation (3) supplémentaires, en particulier des vis, des rivets ou des broches.
